# EUROPEAN PATENT APPLICATION

(11) **EP 4 712 113 A1**
(43) Date of publication of application: **18.03.2026**
(21) Application number: 25194180.3
(22) Date of filing: 05.08.2025
(51) Int. Cl.: H01F 13/00, G01D 5/14, H01F 41/02, H01F 7/02

(54) **DUAL YOKE MAGNETIZATION**

(30) Priority: 30.08.2024 IN 202411065604
(71) Applicant: HONEYWELL INTERNATIONAL INC., Charlotte, NC 28202 (US)
(72) Inventor: SUYAMBU, Prathap, Charlotte, 28202 (US); SANCHIHAR, Paresh, Charlotte, 28202 (US)
(74) Representative: Haseltine Lake Kempner LLP

(57) **Abstract**

Methods, systems, and apparatuses are provided for dual yoke magnetization. Two magnetic yokes (302a, 302b) may be configured with spiral profiles. A first magnetic yoke of the two magnetic yokes may be disposed proximate to a first side of a substantially disc-shaped magnet (304), wherein the substantially disc-shaped magnet defines a cavity approximately at its center. A second magnetic yoke of the two magnetic yokes may be disposed proximate to a second side of the substantially disc-shaped magnet, wherein the second side is opposite the first side. Magnetization may be induced in the substantially disc-shaped magnet via activating the two magnetic yokes.

## Description

### FIELD OF THE INVENTION

Embodiments of the present disclosure generally relate to dual yoke magnetization, particularly to accuracy improvement of spiral magnets therewith.

### BACKGROUND

Magnetizing yokes are used, in some examples, to induce magnetization in various objects (e.g., magnets). It is possible to induce magnetization, for example, in a substantially disc-shaped magnet using single-yoke magnetization. With a single yoke, magnetization of thicker magnets (e.g., 3 mm or greater in thickness, 5 mm or greater in thickness, etc.) may rely on flipping the single yoke at least two or more times. This method may, however, result in neutral axis variations, in some examples. Applicant has identified many technical challenges and difficulties associated with such methods of magnetization and apparatuses and systems associated therewith. Through applied effort, ingenuity, and innovation, many of these identified problems have been solved by developing solutions that are included in embodiments of the present disclosure, many examples of which are described in detail herein.

### BRIEF SUMMARY

Various example embodiments described herein relate to dual yoke magnetization and apparatuses and systems associated therewith.

In accordance with various embodiments of the present disclosure an apparatus is provided. The apparatus comprises two magnetic yokes configured with spiral profiles, wherein: (i) a first magnetic yoke of the two magnetic yokes is disposed proximate to a first side of a substantially disc-shaped magnet, wherein the substantially disc-shaped magnet defines a cavity approximately at its center; (ii) a second magnetic yoke of the two magnetic yokes is disposed proximate to a second side of the substantially disc-shaped magnet, wherein the second side is opposite the first side; and (iii) the two magnetic yokes are configured to induce magnetization in the substantially disc-shaped magnet.

In some embodiments, the apparatus further comprises an assembly comprised of the first magnetic yoke, the substantially disc-shaped magnet, and the second magnetic yoke disposed within a cavity defined by a flange.

In some embodiments, the flange is comprised of a non-magnetic material or a magnetic material.

In some embodiments, the flange is comprised of a ferrous material.

In some embodiments, at least one of the two magnetic yokes is an electromagnet.

In some embodiments, the apparatus further comprises the two magnetic yokes configured such that the two magnetic yokes generate: uniform magnetization in the substantially disc-shaped magnet and uniform flux distribution.

In some embodiments, the spiral profiles are generated responsive to at least one first wire being wrapped around physical features of the first magnetic yoke of the two magnetic yokes and at least one second wire being wrapped around physical features of the second magnetic yoke of the two magnetic yokes such that the at least one first wire and the at least one second wire are spiraled around the first magnetic yoke and the second magnetic yoke, respectively.

In accordance with various embodiments of the present disclosure a system is provided. The system comprises: (1) a movable member whose movement describes a defined path; and (2) an off-axis angle position sensor for measuring an angle position of the movable member, wherein the off-axis angle position sensor is configured using two magnetic yokes having spiral profiles, wherein: (i) a first magnetic yoke of the two magnetic yokes is disposed proximate to a first side of a substantially disc-shaped magnet, wherein the substantially disc-shaped magnet defines a cavity approximately at its center; (ii) a second magnetic yoke of the two magnetic yokes is disposed proximate to a second side of the substantially disc-shaped magnet, wherein the second side is opposite the first side; and (iii) the two magnetic yokes are configured to induce magnetization in the substantially disc-shaped magnet.

In some embodiments, the system further comprises an assembly comprised of the first magnetic yoke, the substantially disc-shaped magnet, and the second magnetic yoke disposed within a cavity defined by a flange.

In some embodiments, the flange is comprised of a non-magnetic material or a magnetic material.

In some embodiments, the flange is comprised of a ferrous material.

In some embodiments, at least one of the two magnetic yokes is an electromagnet.

In some embodiments, the system further comprises the two magnetic yokes configured such that the two magnetic yokes generate: uniform magnetization in the substantially disc-shaped magnet and uniform flux distribution.

In some embodiments, the spiral profiles are generated responsive to at least one first wire being wrapped around physical features of the first magnetic yoke of the two magnetic yokes and at least one second wire being wrapped around physical features of the second magnetic yoke of the two magnetic yokes such that the at least one first wire and the at least one second wire are spiraled around the first magnetic yoke and the second magnetic yoke, respectively.

In accordance with various embodiments of the present disclosure a method is provided. In some embodiments, the method comprises: (i) configuring two magnetic yokes with spiral profiles; (ii) disposing a first magnetic yoke of the two magnetic yokes proximate to a first side of a substantially disc-shaped magnet, wherein the substantially disc-shaped magnet defines a cavity approximately at its center; (iii) disposing a second magnetic yoke of the two magnetic yokes proximate to a second side of the substantially disc-shaped magnet, wherein the second side is opposite the first side; and (iv) inducing magnetization in the substantially disc-shaped magnet via activating the two magnetic yokes.

In some embodiments, the method further comprises disposing an assembly comprised of the first magnetic yoke, the substantially disc-shaped magnet, and the second magnetic yoke into a cavity defined by a flange.

In some embodiments, the flange is comprised of a non-magnetic material or a magnetic material.

In some embodiments, the flange is comprised of a ferrous material.

In some embodiments, at least one of the two magnetic yokes is an electromagnet.

In some embodiments, the method further comprises configuring the two magnetic yokes such that the two magnetic yokes generate: uniform magnetization in the substantially disc-shaped magnet and uniform flux distribution.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a top-down view of an exemplary spiral magnet;
FIG. 2A is an example magnetic flux density plot;
FIG. 2B is an example magnetic flux density plot;
FIG. 3 is a cross-sectional view of an apparatus for implementing dual yoke magnetization;
FIG. 4 is a cross-sectional view of a result of dual yoke magnetization; and
FIG. 5 is a flowchart of an exemplary method for dual yoke magnetization, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "in fluid communication with" in the present disclosure refers to two or more elements or components being connected through one or more paths or pathways, such that a fluid or other flowing media may be input to and/or output from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

The term "sensor" refers to a component that may detect, measure, and/or identify any one or more attributes or characteristics of an environment or media, including but not limited to angle(s), position(s), and/or the like.

In some examples, magnets (e.g., spiral magnets) may be magnetized with improved accuracy (e.g., reducing error in average vertical and radial field flux variations by approximately 33% from approximately +/- 3.1 degrees to approximately +/- 2 degrees) if magnetized via dual yoke magnetization. For example, dual yoke magnetization may be relied upon to generate uniform flux distribution and/or uniform magnetization.

In some examples, single yoke magnetization is used to magnetize various objects (e.g., magnets). However, magnets magnetized via single yoke magnetization may suffer from reduced accuracy and/or variations of the neutral axis. In particular, as thickness of the object to be magnetized is increased (e.g., increased to 3 mm or above, increased to 5 mm or above), varying the location of the yoke relative to sides of the object (e.g., flipping the yoke from one side of the object to another side of the object) may be relied upon. Thus, single yoke magnetization may suffer losses of accuracy, among other issues.

Embodiments of the present disclosure, in some examples, provide methods, systems, and apparatuses for dual yoke magnetization. Magnets (e.g., spiral magnets) that are magnetized via dual yoke magnetization may be used in applications such as, for example, off-angle position sensors. Off-angle position sensors may be configured to measure at least an angle position of a movable member whose movement describes a defined path, in some examples.

Example embodiments of the methods described herein, in some examples, may include configuring two magnetic yokes with spiral profiles. In some examples, the spiral profiles may be configured by wrapping at least one first wire around physical features of a first magnetic yoke of the two magnetic yokes and wrapping at least one second wire around physical features of the second magnetic yoke of the two magnetic yokes. The at least one first wire and the at least one second wire may be disposed such that they spiral around the first magnetic yoke and the second magnetic yoke, respectively. The spiral profiles of the two magnetic yokes may be used to induce spiral magnetization (further described herein) in an object (e.g., magnet).

Example embodiments of the methods described herein, in some examples, may include disposing a first magnetic yoke of the two magnetic yokes proximate to a first side of a substantially disc-shaped magnet. In some examples, the substantially disc-shaped magnet defines a cavity approximately at its center; the cavity may be a substantially circular cavity.

Example embodiments of the methods described herein, in some examples, may include disposing a second magnetic yoke of the two magnetic yokes proximate to a second side of the substantially disc-shaped magnet. In some examples, the second side of the substantially disc-shaped magnet is opposite the first side of the substantially disc-shaped magnet. Disposing each of the two magnetic yokes on opposite sides of the substantially disc-shaped magnet may provide advantages such as eliminating reliance upon flipping a single yoke.

Example embodiments of the methods described herein, in some examples, may include inducing magnetization in the substantially disc-shaped magnet via activating the two magnetic yokes. In some examples, power may be provided to the at least one first wire and the at least one second wire to selectively trigger activation of the two magnetic yokes such that the two magnetic yokes generate a magnetic field that is configured to induce magnetization in the substantially disc-shaped magnet. Thus, in some examples, at least one of the two magnetic yokes may be an electromagnet. The two magnetic yokes may be configured such that they generate uniform magnetization (e.g., in the substantially disc-shaped magnet) and/or uniform flux distribution (e.g., in the cavity defined by the substantially disc-shaped magnet).

Example embodiments of the methods described herein, in some examples, may include disposing an assembly comprised of the first magnetic yoke, the substantially disc-shaped magnet, and the second magnetic yoke into a cavity defined by a flange. The flange may be comprised of a non-magnetic material (e.g., a ferrous material) or a magnetic material. The flange may be configured to protect the substantially disc-shaped magnet and/or couple the substantially disc-shaped magnet to components of devices and/or systems.

As described herein, embodiments of the present disclosure, in some examples, provide methods, systems, and/or apparatuses for dual yoke magnetization.

To address challenges and limitations associated with single yoke magnetization and/or dual yoke magnetization, various examples of the present disclosure may be provided. For example, various examples of the present disclosure may provide example methods, systems, and/or devices for dual yoke magnetization.

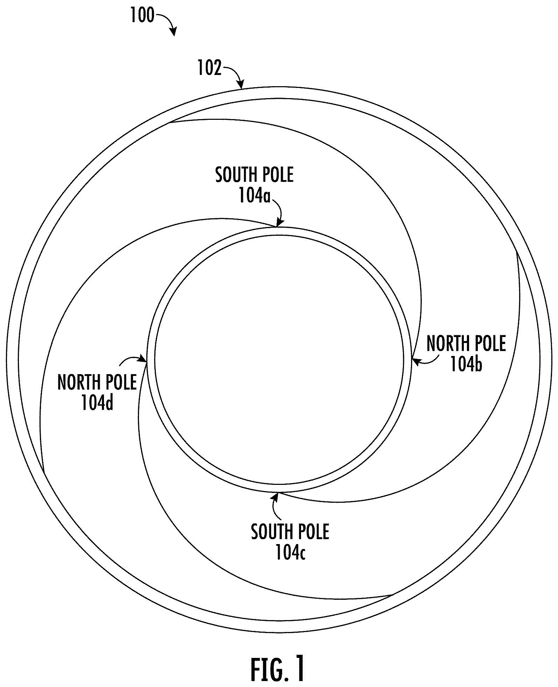

Referring now to FIG. 1, a top-down view of an exemplary spiral magnet 100 is provided. The spiral magnet 100 may be magnetized with the shown spiral magnetization using dual yoke magnetization, as will be further described herein. The spiral magnet 100 comprises a flange 102 and a south pole 104a, a north pole 104b, a south pole 104c, and a north pole 104d (collectively "poles 104"). The spiral magnet 100 may be a four-pole spiral magnet. Although one flange, one magnet, and four poles are shown in the example of FIG. 1, any number of such elements may be present in a spiral magnet assembly.

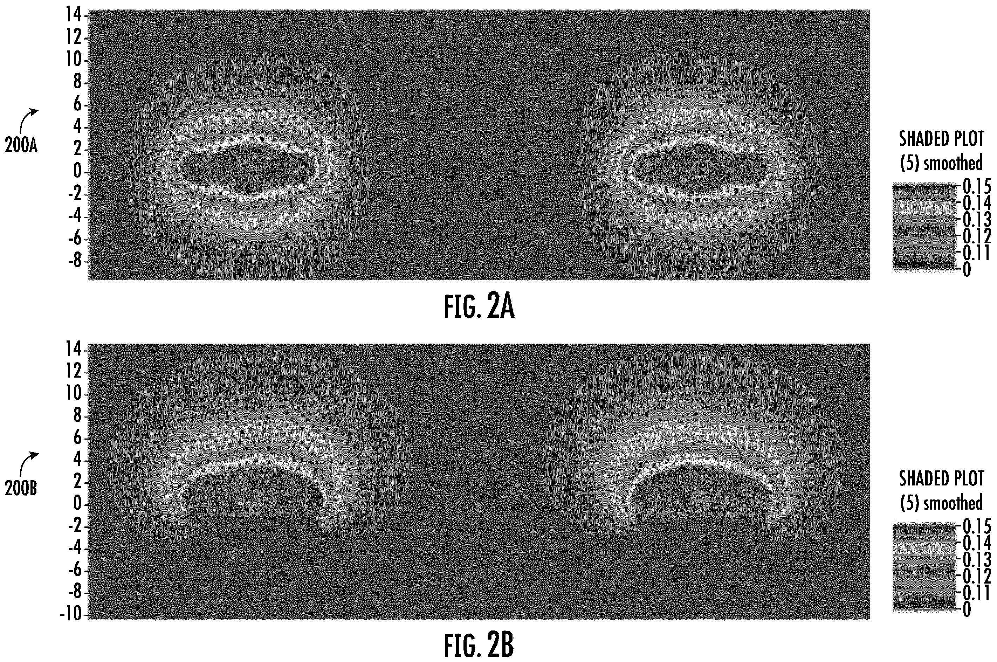

The flange 102 may be comprised of non-magnetic material or magnetic material, as suitable for various applications. The flange 102 may be comprised of ferrous material, for example, which may complement a ferrite and/or rare earth magnet used in the configuration of the spiral magnet 100. In some examples, the flange 102 may be comprised of various materials. In some examples, the spiral magnet 100 may be mechanically coupled to the flange 102 prior to magnetization of the spiral magnet 100. The flange 102 may improve the generated magnetic field by boosting the generated magnetic field to a side of the spiral magnet opposite the flange 102 (described with respect to FIGS. 2A-2B).

The poles 104 may be induced in the spiral magnet 100 via dual yoke magnetization, wherein the two magnet yokes are configured in a spiral profile with a conducting material (further described herein). The poles 104 may alternate in position (e.g., south pole then north pole then south pole, then north pole, etc.) along the spiral magnet 100. In some examples, the locations of the induced poles 104 may be determined by the two magnetic yokes used in the dual yoke magnetization. The poles 104 of the spiral magnet may be induced in a magnet, for example, such as a substantially disc-shaped magnet, wherein the substantially disc-shaped magnet defines an approximately circular cavity at approximately its center. In some examples, the geometry of the magnet may vary, for example, the magnet may be a rectangular magnet, and/or other shapes.

In some examples, the spiral magnet 100 may be used in various applications. For example, the spiral magnet 100 may be used in an off-axis angle position sensor, wherein a sensing element is disposed along the plane of the magnetic flux lines. The sensing element may be a Hall sensing element, an anisotropic magnetoresistance (AMR) sensor, a tunneling magnetoresistance (TMR) sensor, and/or other types of sensing elements. In some examples, the off-axis position sensor may be thus configured to measure at least an angle position of a movable member whose movement describes a defined path.

FIGS. 2A-2B provide magnetic flux density plots. Referring now to FIG. 2A, an example magnetic flux density plot 200A is provided. The plot 200A shows a magnetic flux density of a four-pole spiral magnet, wherein the plot is from a cross-sectional perspective. In the plot 200A, the magnetic flux lines can be seen originating from both sides of the magnet (e.g., from a "top" side and from a "bottom" side), wherein the magnetic flux lines are approximately equally pronounced on both sides of the magnet. In some examples, the spiral magnet of FIG. 2A may be coupled to a nonferromagnetic flange. Alternatively, in some examples, the spiral magnet of FIG. 2A may not be coupled to a nonferromagnetic flange (e.g., the spiral magnet may not be coupled to any flange). Referring now to FIG. 2B, an example magnetic flux density plot 200B is provided. The plot 200B shows a magnetic flux density of a four-pole spiral magnet, wherein the plot is from a cross-sectional perspective. In the plot 200B, the magnetic flux lines can be seen originating from both sides of the magnet (e.g., from a "top" side and from a "bottom" side), wherein the magnetic flux lines are more pronounced on one side of the magnet. In some examples, the spiral magnet of FIG. 2B may be coupled to a ferromagnetic flange. The presence and/or absence of the nonferromagnetic flange boosts the magnetic field generated by the spiral magnet, allowing the magnetic flux density to be observable from both sides of the spiral magnet. The presence of the ferromagnetic flange may impede the magnetic field generated by the spiral magnet. For example, the ferromagnetic flange provides a low reluctance path for the return flux, thus increasing the magnetic flux on one side of the spiral magnet.

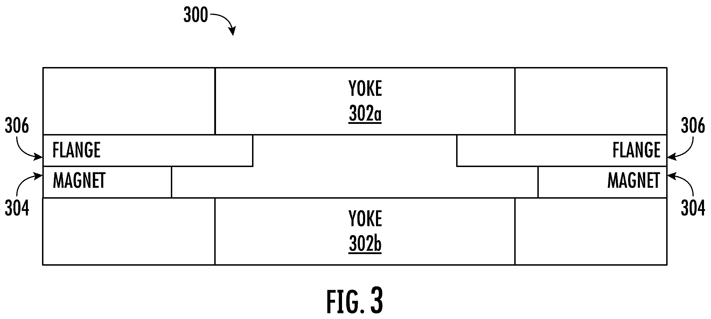

Referring now to FIG. 3, a cross-sectional view of an apparatus 300 for implementing dual yoke magnetization is provided. The apparatus 300 comprises a first yoke 302a and a second yoke 302b (collectively "yokes 302"), a magnet 304, and a flange 306. Although one magnet and one flange are shown in the example of FIG. 3, any number of such elements may be present in the apparatus 300. Implementing dual yoke magnetization relies on the two yokes 302.

The first yoke 302a and/or the second yoke 302b may be comprised of conducting material. For example, the first yoke 302a may be comprised of a first conducting element and a first conducting wire wrapped around the first conducting element such that the first yoke 302a has a spiral profile. For example, the second yoke 302b may be comprised of a second conducting element and a second conducting wire wrapped around the second conducting element such that the second yoke 302b has a spiral profile. The yokes 302 may be magnetic. In some examples, the yokes 302 may be electromagnets. The yokes 302 may be disposed opposite one another proximate to opposite sides of the magnet 304.

The magnet 304 may be comprised of ferrite, rare earth materials, and/or other materials. The magnet 304 may be a substantially disc-shaped magnet, wherein the substantially disc-shaped magnet defines an approximately circular cavity at approximately its center. In some examples, the geometry of the magnet 304 may vary, for example, the magnet 304 may be a rectangular magnet, and/or other shapes.

The flange 306 may be comprised of ferrous material and/or other materials. The flange 306 may be variously shaped. In some examples, the flange 306 may define at least one cavity. The at least one cavity defined by the flange 306 may have corresponding geometry to an assembly of the first yoke, the magnet 304, and the second yoke, such that the assembly couples mechanically to the flange 306. For example, the flange 306 may be configured to wrap around at least a portion of the assembly.

Disposing the yokes 302 on opposite sides of the magnet 304 and supplying current through the yokes 302 (e.g., until saturation) such that a uniform magnetic flux is imparted through the magnet 304 approximately perpendicularly to its surface may result in magnetization of the magnet 304 according to the profile(s) of the yokes 302.

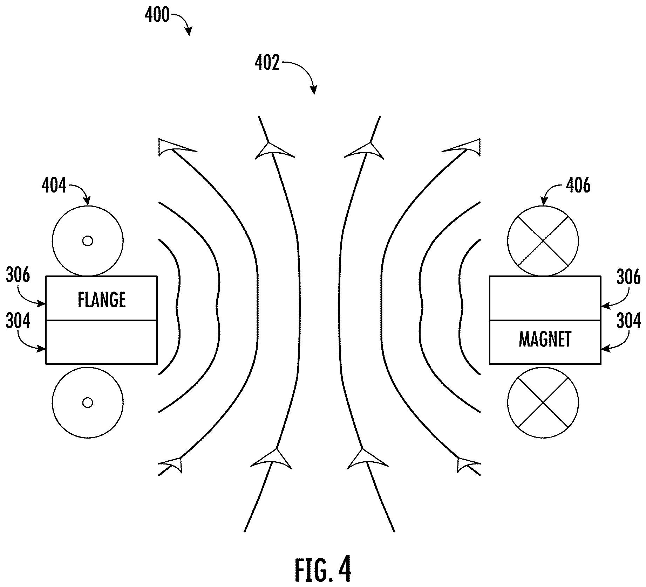

Referring now to FIG. 4, a cross-sectional view 300 of a result of dual yoke magnetization is provided. The view $00 shows the magnet 304, the flange 306, flux lines 402, a first current direction 404, and a second current direction 406. Although the example of FIG. 4 shows one magnet and one flange, any number of such elements may be present in the view 400.

The magnet 304 may be comprised of ferrite, rare earth materials, and/or other materials. The magnet 304 may be a substantially disc-shaped magnet, wherein the substantially disc-shaped magnet defines an approximately circular cavity at approximately its center. In some examples, the geometry of the magnet 304 may vary, for example, the magnet 304 may be a rectangular magnet, and/or other shapes.

The flange 306 may be comprised of ferrous material and/or other materials. The flange 306 may be variously shaped. In some examples, the flange 306 may define at least one cavity. The at least one cavity defined by the flange 306 may have corresponding geometry to an assembly of the first yoke, the magnet 304, and the second yoke, such that the assembly couples mechanically to the flange 306. For example, the flange 306 may be configured to wrap around at least a portion of the assembly.

The flux lines 402 (e.g., field lines) may indicate the direction and/or strength of the induced magnetic field. For examples, the magnetic flux at a given location is indicated by the total (e.g., net) number of field lines passing through a given surface (e.g., object and/or the like).

The first current direction 404 indicates current traveling out of the page. Current traveling in the first current direction 404 generates a magnetic field whose field lines point in a direction from the magnet 304 to the flange 306 (e.g., upward). The second current direction 406 indicates current traveling into the page. Current traveling in the second current direction 406 generates a magnetic field whose field lines point in a direction from the magnet 304 to the flange 306 (e.g., upward). Current-carrying conductors (e.g., carrying current travelling in the directions 404 and 406) may act as Helmholtz coils such that flux lines between the current-carrying conductors are parallel or substantially parallel, resulting in magnetization of the magnet 304.

By magnetizing the magnet 304 using dual yoke magnetization, the flux lines 402 are substantially vertical at the center (e.g., in comparison to more rounded flux lines resulting from single yoke magnetization), resulting in uniform flux in the cavity defined by the magnet 304 and/or in uniform magnetization of the magnet 304.

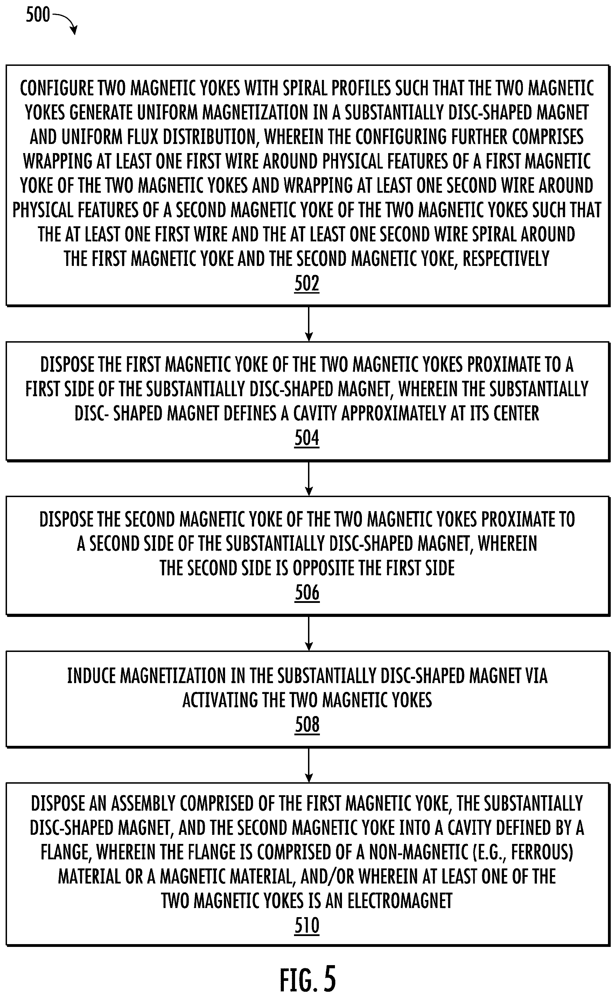

Referring now to FIG. 5, a flowchart of an exemplary method 500 for dual yoke magnetization is provided.

At step/operation 502, two magnetic yokes may be configured with spiral profiles such that the two magnetic yokes generate uniform magnetization in a substantially disc-shaped magnet and uniform flux distribution. The configuring may further comprise wrapping at least one first wire around physical features of a first magnetic yoke of the two magnetic yokes and wrapping at least one second wire around physical features of a second magnetic yoke of the two magnetic yokes such that the at least one first wire and the at least one second wire spiral around the first magnetic yoke and the second magnetic yoke, respectively. In some examples, the two magnetic yokes are the yokes 302. In some examples, the substantially disc-shaped magnet may be the spiral magnet 100 and/or the magnet 304.

At step/operation 504, the first magnetic yoke of the two magnetic yokes may be disposed proximate to a first side of the substantially disc-shaped magnet, wherein the substantially disc-shaped magnet defines a cavity approximately at its center.

At step/operation 506, the second magnetic yoke of the two magnetic yokes may be disposed proximate to a second side of the substantially disc-shaped magnet, wherein the second side is opposite the first side.

At step/operation 508, an assembly comprised of the first magnetic yoke, the substantially disc-shaped magnet, and the second magnetic yoke may be disposed and/or mechanically coupled into a cavity defined by a flange, wherein the flange is comprised of a non-magnetic (e.g., ferrous) material or a magnetic material, and/or wherein at least one of the two magnetic yokes is an electromagnet.

Advantages of dual yoke magnetization as described herein include, in some examples, improving accuracy of spiral magnet magnetization. For example, improving the accuracy of the magnetization may entail reducing error in average vertical and radial field flux variations, in some examples, by approximately 33%, for example, from approximately +/- 3.1 degrees to approximately +/- 2 degrees. For example, improving the accuracy of the magnetization may entail reducing error in average vertical and radial field flux variations, in some examples, by approximately greater than or equal to 66%, for example, to approximately +/- 1 degree.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. An apparatus comprising:
two magnetic yokes configured with spiral profiles, wherein:
a first magnetic yoke of the two magnetic yokes is disposed proximate to a first side of a substantially disc-shaped magnet, wherein the substantially disc-shaped magnet defines a cavity approximately at its center;
a second magnetic yoke of the two magnetic yokes is disposed proximate to a second side of the substantially disc-shaped magnet, wherein the second side is opposite the first side; and
the two magnetic yokes are configured to induce magnetization in the substantially disc-shaped magnet.

2. The apparatus of claim 1, further comprising an assembly comprised of the first magnetic yoke, the substantially disc-shaped magnet, and the second magnetic yoke disposed within a cavity defined by a flange.

3. The apparatus of any of claims 1 to 2, wherein the flange is comprised of a non-magnetic material or a magnetic material.

4. The apparatus of any of claims 1 to 3, wherein the flange is comprised of a ferrous material.

5. The apparatus of any of claims 1 to 4, wherein at least one of the two magnetic yokes is an electromagnet.

6. The apparatus of any of claims 1 to 5, further comprising the two magnetic yokes configured such that the two magnetic yokes generate: uniform magnetization in the substantially disc-shaped magnet and uniform flux distribution.

7. The apparatus of any of claims 1 to 6, wherein the spiral profiles are generated responsive to at least one first wire being wrapped around physical features of the first magnetic yoke of the two magnetic yokes and at least one second wire being wrapped around physical features of the second magnetic yoke of the two magnetic yokes such that the at least one first wire and the at least one second wire are spiraled around the first magnetic yoke and the second magnetic yoke, respectively.

8. A system comprising:
a movable member whose movement describes a defined path; and
an off-axis angle position sensor for measuring an angle position of the movable member, wherein the off-axis angle position sensor is configured using two magnetic yokes having spiral profiles, wherein:
a first magnetic yoke of the two magnetic yokes is disposed proximate to a first side of a substantially disc-shaped magnet, wherein the substantially disc-shaped magnet defines a cavity approximately at its center;
a second magnetic yoke of the two magnetic yokes is disposed proximate to a second side of the substantially disc-shaped magnet, wherein the second side is opposite the first side; and
the two magnetic yokes are configured to induce magnetization in the substantially disc-shaped magnet.

9. The system of claim 8, further comprising an assembly comprised of the first magnetic yoke, the substantially disc-shaped magnet, and the second magnetic yoke disposed within a cavity defined by a flange.

10. The system of any of claims 8 to 9, wherein the flange is comprised of a non-magnetic material or a magnetic material.

11. The system of any of claims 8 to 10, wherein the flange is comprised of a ferrous material.

12. The system of any of claims 8 to 11, wherein at least one of the two magnetic yokes is an electromagnet.

13. The system of any of claims 8 to 12, further comprising the two magnetic yokes configured such that the two magnetic yokes generate: uniform magnetization in the substantially disc-shaped magnet and uniform flux distribution.

14. The system of any of claims 8 to 13, wherein the spiral profiles are generated responsive to at least one first wire being wrapped around physical features of the first magnetic yoke of the two magnetic yokes and at least one second wire being wrapped around physical features of the second magnetic yoke of the two magnetic yokes such that the at least one first wire and the at least one second wire are spiraled around the first magnetic yoke and the second magnetic yoke, respectively.

15. A method comprising:
configuring two magnetic yokes with spiral profiles;
disposing a first magnetic yoke of the two magnetic yokes proximate to a first side of a substantially disc-shaped magnet, wherein the substantially disc-shaped magnet defines a cavity approximately at its center;
disposing a second magnetic yoke of the two magnetic yokes proximate to a second side of the substantially disc-shaped magnet, wherein the second side is opposite the first side; and inducing magnetization in the substantially disc-shaped magnet via activating the two magnetic yokes;
disposing an assembly comprised of the first magnetic yoke, the substantially disc-shaped magnet, and the second magnetic yoke into a cavity defined by a flange;
wherein the flange is comprised of a non-magnetic material or a magnetic material;
wherein at least one of the two magnetic yokes is an electromagnet; and
configuring the two magnetic yokes such that the two magnetic yokes generate uniform magnetization in the substantially disc-shaped magnet and uniform flux distribution.
